Europäisches Patentamt

European Patent Office

Office européen des brevets

(19)

(11) EP 0 684 343 B1

(12) **EUROPÄISCHE PATENTSCHRIFT**

(45) Veröffentlichungstag und Bekanntmachung des Hinweises auf die Patenterteilung:
**25.08.1999 Patentblatt 1999/34**

(51) Int Cl.⁶: **E02D 19/18**, E02D 31/00

(21) Anmeldenummer: **95105330.5**

(22) Anmeldetag: **08.04.1995**

(54) **Verfahren zur Herstellung von Dichtwänden**

Process for the production of impervious walls

Procédé pour la fabrication de parois étanches

(84) Benannte Vertragsstaaten:
**AT BE CH DE ES FR GB IT LI NL**

(30) Priorität: **27.05.1994 DE 4418629**

(43) Veröffentlichungstag der Anmeldung:
**29.11.1995 Patentblatt 1995/48**

(73) Patentinhaber: **SÜD-CHEMIE AG**
**80333 München (DE)**

(72) Erfinder:
• **Hähn, Reinhard, Dr.**
  **D-84186 Vilsheim (DE)**
• **Schall, Norbert, Dr.**
  **D-85465 Langenpreising (DE)**

(74) Vertreter: **Reitzner, Bruno, Dr. et al**
**Patentanwälte Dipl.-Ing. R. Splanemann**
**Dr. B. Reitzner, Dipl.-Ing. K. Baronetzky**
**Tal 13**
**80331 München (DE)**

(56) Entgegenhaltungen:
| | |
|---|---|
| EP-A- 0 264 527 | EP-A- 0 278 419 |
| CH-A- 682 502 | US-A- 4 909 674 |
| US-A- 4 927 297 | US-A- 5 112 665 |

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren der Herstellung von Dichtwänden sowie eine Geotextilmatte hierfür.

Vertikale, im Boden hergestellte Dichtwände sind bekannt, beispielsweise als wasserdichte Baugrundumschließung, als Herdmauern in Staudämmen oder als Uferschutz in Gewässern.

Seit Ende der 70er Jahre kommen vertikale Dichtwände als Einkapselungen für ursprünglich nicht abgedichtete Schadstoffablagerungen (Altlasten) zur Anwendung. Die wesentliche Funktion einer Dichtwand ist die Unterbrechung des Grundwasserstroms. Hiermit wird der wichtigste Emissionspfad von Schadstoffen unterbrochen, und Sickerwasser aus Altlasten bleiben eingekapselt.

Dichtwände werden beispielsweise im Schlitzwandverfahren (Einphasenverfahren und Zweiphasenverfahren) eingebracht. Beim Zweiphasenverfahren erfolgt der Aushub zunächst unter Verwendung einer Bentonit/Wasser-Suspension als Stützflüssigkeit. Nach Erreichen der Endtiefe wird die Bentonitsuspension durch die Dichtwandmasse ausgetauscht, die nach dem hydraulischen Abbinden die Dichtwand ausbildet.

Beim Einphasenverfahren ist die Stützflüssigkeit gleichzeitig die Dichtwandmasse. Als Dichtwandmasse kommt eine Suspension aus in Wasser quellfähigem Bentonit (etwa 30 - 60 kg/m$^3$), Zement (etwa 150 - 300 kg/$^3$) und Wasser (etwa 650 - 950 kg/m$^3$) zum Einsatz. Der Aushub der Dichtwand erfolgt in dieser Suspension. Nach Erreichen der Endtiefe verbleibt die Stützflüssigkeit/Dichtwandmasse im Schlitz und bindet hydraulisch ab (David Urban, Vertikale Abdichtung von Deponien und kontaminierten Böden, BBR 3/93, 44. Jahrgang, S. 102 ff).

Die so hergestellten Dichtwände weisen bauartbedingt bereits eine sehr geringe Durchlässigkeit gegenüber Wasser auf. Um die Wasserdurchlässigkeit, aber auch das Durchdringen der Dichtwand durch die Schadstoffe weiter zu reduzieren, wurden sogenannte Kombinations-Dichtwände entwickelt. Hierbei werden in die Dichtwandmasse vor deren hydraulischer Abbindung HDPE-Folien (HDPE = Polyethylen mit hoher Dichte) in vertikaler Richtung eingebracht. Die Verbindung der einzelnen Bahnen erfolgt über Schloßmechanismen, die gegebenenfalls mit zusätzlichen Dichtmassen abgedichtet sind. Auf diese Art und Weise wird die Dichtwand in der gesamten Fläche durch eine wasserundurchlässige HDPE-Folie zusätzlich abgedichtet.

So beschreibt die DE-C-3 605 252 eine Schlitzwand zur Vertikalabdichtung von flüssigkeitsführenden und/oder gasführenden Schichten mit einem in das Erdreich bis zu einer undurchlässigen Horizontalschicht eingebrachten Schlitz, der mit einer Masse, wie Bentonit, verfüllt ist, und mit einer darin versenkten Abdichtung, die aus mehreren wasserundurchlässigen Abdichtungsbahnen zusammengesetzt ist, welche an den Stoßstellen durch einen Schloßmechanismus aus zwei hakenförmig ineinandergreifenden Teilen miteinander verbindbar sind.

Die DE-A-3 504 119 beschreibt ebenfalls Schlitzwände mit Abdichtungsbahnen, welche über Schloßelemente (ineinandergesteckte Rohre) miteinander verbunden sind.

Die EP-B-0 278 343 beschreibt eine Vorrichtung zur Verbindung von in eine Dichtungswand einzubauenden Dichtungsfolien. Die Dichtungsfolien bestehen aus flüssigkeitsundurchlässigem Kunststoff, die über einen speziellen Schloßmechanismus dichtend miteinander verbunden werden.

Problematisch ist in allen diesen Fällen die Gewährleistung der mechanischen Unversehrtheit der Folie nach dem Einbau, und es stellt sich die Frage nach der Langzeitstabilität der Kunststoffdichtungsbahn.

Es besteht daher Bedarf nach einem zusätzlichen Dichtungselement bei dem die beim Einbau gegebenenfalls aufgetretenen mechanischen Beschädigungen wieder ausgeglichen werden. Weiterhin soll ein derartiges Dichtelement über längere Zeiträume stabil sein.

Die DE-A-4 221 329 beschreibt Bentonit-Geotextilmatten, welche in den Randbereichen, in denen die Matten beim Ausbringen übereinandergelegt werden, Austrittsschlitze für mit Wasser angequollenem Bentonit enthalten. Der ausgetretene Bentonit soll eine dichte Verbindung der Matten in den Überlappungsbereichen ergeben. Die Dichtungsmatten werden nicht zur Herstellung von Dichtwänden verwendet, sondern zur horizontalen Abdichtung von Deponien. Sie enthalten keinen Schloßmechanismus zum Verbinden einer Bahn mit einer anderen Bahn.

Die US-A-5 173 344 betrifft die dichtende Verbindung von Bentonit-Geotextilmatten. Diese werden überlappend ausgelegt, wobei im Überlappungsbereich ein zylindrischer Strang eingebracht wird, welcher aus Bentonit, umhüllt mit einem Polyestergewebe, besteht. Beim Zutritt von Wasser quillt der in dem Strang befindliche Bentonit an, sprengt die Hülle und verteilt sich im Überlappungsbereich, wobei die Dichtungsbahnen dicht miteinander verbunden werden sollen. Eine dichte Verbindung ist jedoch nicht gewährleistet, wenn die Matten Zugkräften ausgesetzt sind. Insbesondere sind sie für den Einbau in vertikaler Richtung nicht geeignet, da beim Einbau immer Zugkräfte zwischen den einzelnen Bahnen wirken.

Die US-A-4 565 468 betrifft eine Bentonit-Geotextilmatte für die horizontale Ausbringung, wobei die einzelnen Bahnen durch eine Art Klebefolie miteinander verbunden sind. Die Dichtwirkung ist jedoch nicht gewährleistet, da die Klebefolie bei einer mechanischen Beanspruchung, wie sie beim Einbau der Matten in vertikale Dichtwände auftritt, keine ausreichende Festigkeit besitzt.

Die US-A-4 048 373 beschreibt eine Dichtmatte, die zwischen zwei Kartonschichten eine Bentonitschicht enthält, in welcher Salze der Phosphorsäure, Borsäure und Essigsäure, ergänzt durch wasserlösliche Polymere, enthalten sind. Es handelt sich nicht um eine Bentonit-Geotextilmatte zum Einbau in vertikaler Richtung in Dichtwände, und die einzelnen Matten können nicht fest miteinander verbunden werden.

Aus der US-A-4 103 499 ist eine Bentonit-Geotextilmatte bekannt, wobei in der Bentonitschicht Salze der Essigsäure, Phosphorsäure oder Borsäure und gegebenenfalls hydrophile Polymere enthalten sind. Der Zusatz dieser Salze soll die Dichtigkeit gegenüber kochsalzhaltigen Flüssigkeiten verbessern. Die Geotextilmatte kann zum Einbau in Schlitzwände nicht verwendet werden, weil an den seitlichen Rändern keine Schloßmechanismen vorgesehen sind.

Aus dem DE-U-9 400 650 ist eine Verbundmatte, insbesondere für den Fels-, Böschungs- und Deponiebau bekannt, die im wesentlichen aus nach Art von Kett- und Schußfäden miteinander verwebten, eine Gittermatte bildenden Streifen aus Chemie- oder Naturfasern und mindestens einer mit der Gittermatte verbindbaren Beschichtung besteht. Die Gittermatten weisen mindestens teilweise Verstärkungen auf, und die Randbereiche der Gittermatte und/oder der Beschichtung sind als Verbindungselemente ausgebildet. Die Verbundmatte dient nur zur Abstützung von erosionsgefährdeten Bereichen und hat keine Dichtwirkung.

Der Erfindung liegt die Aufgabe zugrunde, ein Verfahren zur Herstellung von Dichtwänden bereitzustellen, die eine Barriere gegen den Durchtritt von Flüssigkeiten darstellen, wobei das Dichtelement auch plastisch verformbar sein soll.

Überraschenderweise wurde gefunden, daß sich die Dichtigkeit von Dichtwänden dadurch verbessern läßt, daß in eine noch nicht hydraulisch abgebundene Dichtwandmassensuspension Geotextilmatten in Bahnen eingebracht werden, die zwischen den Geotextilschichten in Wasser quellfähigen Smektit enthalten, wobei die Bahnen durch einen seitlichen Schloßmechanismus dicht miteinander verbunden werden.

Unter den Geotextilschichten, die als Gewebe oder als Vlies ausgeführt sein können, versteht man Schichten aus nicht oder nur schwer verrottbaren Kunststoffasern, z.B. aus Polypropylen, Polyethylen, Polyvinylchlorid oder Polyamiden (im Gegensatz zu leicht verrottbaren Textilmaterialien, wie Baumwolle, Zellstoff, usw.). Zwischen den Geotextilschichten ist eine Sorptions- und Dichtschicht mit einer Dicke von etwa 2 bis 5 mm aus in Wasser quellfähigen Smektit (Pulver oder Granulat) eingebracht. Der Smektit kann durch Klebstoffe (z.B. Leim) oder Vernadeln der Geotextilschichten zwischen den Geotextilschichten fixiert sein, wobei auch die mechanische Stabilität beim Einbau verbessert wird.

Der Smektit quillt mit dem in der Suspension enthaltenen Wasser auf. Die Quellung erfolgt gegen den sich beim Abbinden der Dichtwandmassensuspension entstehenden mechanischen Widerstand, so daß sich in der Dichtwandmasse eine Schicht aus gequollenem Smektit befindet, der die Dichtigkeit gegenüber Wasser weiter verbessert. Dieses zusätzliche Dichtelement kann sich mechanischen Verwerfungen in der Dichtwand wegen seiner Plastizität anpassen, kann eventuelle, beim Einbau erfolgende mechanische Beschädigungen der Bentonitmatte durch die Quellwirkung selbsttätig "ausheilen" und verfügt über die erforderliche Langzeitstabilität. Der für die Herstellung der Geotextilmatte verwendete quellfähige Smektit sollte so ausgewählt werden, daß er auch bei einem in Zementsuspensionen anzutreffenden Ca-Ionen-Überschuß noch über gute Quelleigenschaften verfügt.

Die in Wasser quellfähigen Smektite sind vorzugsweise aus der Gruppe der Montmorillonite, Beidellite, Hektorite und Saponite ausgewählt. Die Ionenaustauschkapazität soll mindestens 30 mVal/100 g betragen.

Dem in Wasser quellfähigen Smektit kann ein organophiler Smektit beigemischt werden, wobei das Gewichtsverhältnis zwischen dem in Wasser quellfähigen Smektit und dem organophilen Smektit 99:1 bis 80:20 betragen kann.

Der organophile Smektit ist das Reaktionsprodukt eines anorganischen Smektits, vorzugsweise eines in Wasser quellfähigen Smektits, mit einer kationischen anorganischen Verbindung, vorzugsweise einer quaternären Ammoniumverbindung. Die zur Umsetzung benötigte Menge des organischen Kations soll zwischen 30 und 120 mVal/100 g anorganischen Smektit betragen.

Gegenstand der Erfindung ist ferner eine Geotextilmatte in Bahnform für den Einbau in Dichtwände, die dadurch gekennzeichnet ist, daß sie zwischen zwei Geotextilschichten eine Dichtschicht aus in Wasser quellfähigem Smektit enthält und an den Seitenrändern einen Schloßmechanismus zum dichten Verbinden zweier Bahnen aufweist.

Der Einbau der Geotextilmattenbahnen in die mit Dichtwandmassensuspension verfüllte Schlitzwand erfolgt mit ähnlichen Systemen wie beim Einbau von HDPE-Folien, d.h. zwei oder mehrere Geotextilmatten werden an den seitlichen Schloßmechanismen miteinander verbunden und an einem Einbaurahmen in die Suspension abgesenkt.

Der Schloßmechanismus weist vorzugsweise an den Seitenrändern der Bahnen angebrachte Profile auf, wobei die Profile der einen Bahn in die Profile der anderen Bahn eingreifen.

Die Profile der Matten können (a) selbstdichtend oder (b) durch Dichtmittel abdichtbar sein.

Einige Ausführungsbeispiele von Geotextilmatten mit Schloßmechanismen sind nachstehend erläutert.

Bei der ersten Ausführungsform sind zwei Geotextil-Smektit-Matten miteinander verbunden, die jeweils zwei äußere Geotextilschichten aus Polypropylenfaservlies aufweisen. Zwischen den Geotextilschichten befindet sich eine etwa 3-5 mm starke Schicht aus in Wasser quellfähigen Smektit, die mit Hilfe von Leim mit den äußeren Geotextilschichten verbunden ist. Die Geotextilschichten sind miteinander vernadelt. In den Seitenrandbereich der beiden Matten, der frei von Smektit ist, sind komplementäre hakenförmige Kunststoffprofile eingefügt, die vorzugsweise ebenfalls aus Polypropylen bestehen, so daß sie mit den Geotextilschichten verschweißt werden können. Der andere linke Randbereich der Matte enthält ein entsprechendes Profil, wobei zwischen den Geotextilschichten ein Profil entsprechend den vorstehend genannten Profilen eingefügt werden kann. In entsprechender Weise ist der rechte Randbereich der Matte zwischen den Geotextilschichten mit hakenförmigen Kuststoffprofilen versehen.

Beim Einbau werden die Matten an den hakenförmigen Profilen miteinander verbunden. Wenn die Profile genau ineinander passen, ist die Anordnung dicht. Vorzugsweise wird jedoch zwischen die Profile eine Dichtmasse (z.B. eine Dichtwandsuspension aus Smektit und Zement) eingebracht.

Bei der zweiten Ausführungsform sind zwei Geotextil-Smektit-Matten miteinander verbunden, die wie bei der ersten Ausführungsform, jeweils eine Smektitschicht zwischen zwei vernadelten Geotextilschichten enthalten. Im smektitfreien Randbereich zwischen den Geotextilschichten sind Kunststoffprofile eingefügt und mit diesen Schichten verschweißt. Das eine Kunststoffprofil ist am Ende wulstförmig verbreitert und enthält eine Bohrung sowie eine am unteren Ende des Profils (bei abgesenkter Matte) von dieser Bohrung ausgehende seitliche Bohrung.

In den Randbereich der Geotextil-Smektit-Matte, bestehend aus den zwei Geotextilschichten und der Smektitschicht ist ein Kunststoffprofil eingefügt, welches am äußeren Ende ein offenes Rohr bildet, das den Endwulst des einen Profils möglichst dichtschließend umgreift.

In die anderen Randbereiche der Matten (links) und (rechts) können Dichtprofile der vorstehend genannten Art eingefügt sein, wobei die Dichtprofile der an die anderen Randbereiche angefügten weiteren Bahnen komplementär ausgebildet sind. Die Matten können entweder durch Einschnappen oder durch Ineinanderschieben der Profile miteinander verbunden werden. Durch eine Bohrung kann beim Einbau der Dichtmatten eine Dichtmasse nach unten eingespritzt werden, die über eine andere Bohrung von unten nach oben in den Zwischenraum zwischen dem Endwulst des ersten Profils und dem Endteil des zweiten Profils der zweiten Matte eindringt.

Die dritte Ausführungsform entspricht im wesentlichen der zweiten Ausführungsform. Die eckigen Dichtprofile greifen mit ihren entsprechenden Vorsprüngen komplementär ineinander. Die Matten werden durch Ineinanderschieben der Profile miteinander verbunden. Wie bei der zweiten Ausführungsform können die Profilverbindungen mit einer Dichtmasse abgedichtet werden.

Die Erfindung ist durch die nachstehenden Beispiele erläutert.

Beispiel 1 (Vergleich)

30 g zementstabiler, in Wasser quellfähiger Natriumbentonit (Tixoton® CV 15; Hersteller Süd-Chemie AG) wurden zunächst 20 min bei 2.800 U/min mit einem Hochgeschwindigkeitsrührer in 933 g Wasser dispergiert. Die Suspension wurde 24 h zum Quellen zwischengelagert. Nach 25 h wurden in einem zweiten Mischvorgang 175 kg Hochofenzement zugegeben. Die Mischzeit betrug 10 Minuten.

Anschließend wurde die Bentonit-Zementsuspension in zylindrische Probengefäße mit einem Innendurchmesser von 10 cm und einer Höhe von 10 cm gegossen und 14 Tage aushärten gelassen. Die ausgehärteten Probenkörper wurden in Anlehnung an DIN 18130 in eine Triaxialzelle eingebaut und unter einem hydraulischen Gefälle von i = 30 mit destilliertem Wasser durchströmt. Es wurde ein Durchlässigkeitsbeiwert (k) vom $7,0 \cdot 10^{-7}$ m/sec gefunden.

Beispiel 2 (Erfindung)

Die Herstellung der Dichtwandmassensuspension erfolgte analog Beispiel 1. Zur Herstellung der Formkörper wurden auf der Innenseite des Hohlzylinders kleine Vorsprünge zum Auflegen einer kreisförmig zugeschnittenen Geotextil-Bentonitmatte angebracht.

Der Hohlkörper wurde bis zu den Vorsprüngen mit der Bentonit-Zement-Suspension aufgefüllt, worauf die zurechtgeschnittene Geotextil-Bentonit-Matte eingelagert wurde. Diese enthielt zwischen zwei Schichten aus Polypropylen-Faservlies eine etwa 3mm dicke Schicht aus zementstabilem, in Wasser quellfähigem Natriumbentonit (Tixoton ® CV 15). Die Bentonitschicht war mit Leim an den Polypropylen-Vliesschichten fixiert.

Anschließend wurde Hohlzylinder mit Bentonit-Zement-Suspension aufgefüllt. Dann wurde der Formkörper wie nach Beispiel 1 14 Tage unter Wasser gelagert, worauf der Wasserdurchlässigkeitsbeiwert (k) wie nach Beispiel 1 quer zur Geotextilmatte gemessen wurde.

$$\text{Ergebnis: } k = 9,1 \cdot 10^{-9} \text{ m/sec}$$

Beispiel 3 (Erfindung)

Die Arbeitsweise von Beispiel 2 wurde mit der Abweichung wiederholt, daß eine Mischung aus 20 Gew.-% organophilem Bentonit (Tixosorb ®, Hersteller Süd-Chemie AG) und 80 Gew.-% in Wasser quellfähigem Bentonit (Tixogel ®, CV 15 ) verwendet wurde.

Nach dem Aushärten der Zementsuspension wurde in den Hohlzylinder eine wäßrigen Phenollösung, enthaltend 100 ppm Phenol, gefüllt. Der Durchlässigkeitsbeiwert k betrug $9,8 \cdot 10^{-9}$ m/sec. Im Versuchszeitraum von 20 Tagen war im Permeat nach der HPLC-Methode kein Phenol feststellbar (Nachweisgrenze 20 ppm Phenol).

Beispiel 4 (Erfindung)

Es wurden zwei Geotextil-Bentonit-Matten mit Schloßmechanismen entsprechend der Ausführungsform vom Figur 2 hergestellt, die zu Halbkreisen gebogen und durch Ineinanderschieben der Profile 1d und 2d zu einem Hohlzylinder verbunden wurden. Jede Matte hatte eine Länge von 75 cm und eine Höhe von 55 cm. Die etwa 3 mm starke Bentonitschicht 1c, 2c (Tixoton ® CV15) war mit Hilfe von Leim mit den Polypropylen-Vliesschichten la und 1b bzw. 2a und 2 b verbunden. Weiterhin waren die Matten vernadelt.

Die Zwischenräume zwischen den Matten wurden durch Einspritzen einer Zement-Bentonit-Dispersion durch die Öffnungen 1e und 1f abgedichtet. Der Hohlzylinder wurde etwa 12 Stunden in Wasser gestellt, so daß der Bentonit quellen konnte, worauf der Hohlzylinder in eine Wanne mit einem Durchmesser von 60 cm gestellt wurde, die eine etwa 10 cm dicke Schicht aus Natriumbentonit mit einem Wassergehalt von 40% enthielt. Der Hohlzylinder ragte etwa 5 cm in den Bentonit, der an die Vliesschichten der Matten angepreßt wurde, so daß ein dichter Bodenabschluß gewährleistet war. Dann wurde der Hohlzylinder bis zum oberen Rand mit Wasser aufgefüllt. Nach einer Standzeit von 24 Stunden bei einem Druck von 50 cm Wassersäule war kein Durchtritt von Wasser zu der Außenwand des Hohlzylinders feststellbar.

**Patentansprüche**

1. Verfahren zur Herstellung von Dichtwänden, dadurch gekennzeichnet, daß man in eine noch nicht hydraulisch abgebundene Dichtwandmassensuspension Geotextilmatten in Bahnen einbringt, die zwischen Geotextilschichten in Wasser quellfähigen Smektit enthalten, wobei die Bahnen durch einen seitlichen Schloßmechanismus dicht miteinander verbunden werden.

2. Verfahren nach Anspruch 1, dadurch gekennzeichnet, daß der in Wasser quellfähige Smektit aus der Gruppe der Montmorillonite, Beidellite, Hektorite und Saponite ausgewählt ist.

3. Verfahren nach Anspruch 1 oder 2, dadurch gekennzeichnet, daß dem in Wasser quellfähigen Smektit ein organophiler Smektit beigemischt wird, wobei das Gewichtsverhältnis zwischen dem in Wasser quellfähigen Smektit und dem organophilen Smektit 99:1 bis 20:80 beträgt.

4. Geotextil-Smektitmatte in Bahnform für den Einbau in Dichtwände, dadurch gekennzeichnet, daß sie zwischen zwei Geotextilschichten eine Dichtschicht aus in Wasser quellfähigem Smektit enthält und an jedem Seitenrand einen Schloßmechanismus zum dichten Verbinden der Bahn mit einer anderen Bahn, die einen komplementären Schloßmechanismus an jedem Seitenrand besitzt, aufweist.

5. Matte nach Anspruch 4, dadurch gekennzeichnet, daß der Schloßmechanismus an den Seitenrändern der Bahnen angebrachte Profile aufweist, wobei die Profile der einen Bahn in die Profile der anderen Bahn eingreifen.

6. Matte nach Anspruch 5, dadurch gekennzeichnet, daß die Profile (a) selbstdichtend oder (b) durch Dichtmittel abdichtbar sind.

**Claims**

1. A process for producing cut-off walls, characterized in that a geotextile mat in the form of webs which contain a water-swellable smectite between geotextile layers is introduced into a not yet hydraulically set suspension of a cut-off wall composition, the webs being tightly joined by a lateral locking mechanism.

2. The process of Claim 1, characterized in that the water-swellable smectite is selected from the group of montmorillonites, beidellites, hectorites and saponites.

3. The process of Claims 1 or 2, characterized in that an organophilic smectite is admixed with the water-swellable smectite in a weight ratio between the water-swellable smectite and the organophilic smectite from about 99:1 to 20:80.

4. A geotextile-smectite mat in web form to be incorporated in cut-off walls, characterized in that it contains a sealing layer of a water-swellable smectite between two geotextile layers and a locking mechanism on side edges thereof for tight joining of the web with another web that has a complementary locking mechanism on its side edge.

5. The mat of Claim 4, characterized in that the locking mechanism has profiles positioned on the side edges of the webs in which the profiles of one web mesh with the profiles of the other web.

6. The mat of Claim 5, characterized in that the profiles are (a) self-sealing, or are (b) sealable with a sealant.

## Revendications

1. Procédé de fabrication de parois étanches, caractérisé en ce que l'on introduit dans une suspension de pâte pour parois étanches n'ayant pas encore pris hydrauliquement des nattes de géotextile sous forme de feuilles contenant de la smectite gonflant à l'eau entre des couches de géotextile, les feuilles étant liées les unes aux autres de manière étanche par un mécanisme de fermeture latérale.

2. Procédé selon la revendication 1, caractérisé en ce que la smectite gonflant à l'eau est choisie dans le groupe comprenant les montmorillonites, les beidellites, les hectorites et les saponites.

3. Procédé selon la revendication 1 ou la revendication 2, caractérisé en ce que l'on mélange à la smectite gonflant à l'eau une smectite organophile, le rapport en poids de la smectite gonflant à l'eau sur la smectite organophile allant de 99/1 à 20/80.

4. Natte de smectite pour géotextile, sous forme de feuille, destinée à être incorporée dans des parois étanches, caractérisée en ce qu'elle comprend une couche étanche de smectite gonflant à l'eau entre deux couches de géotextile et, sur chaque bord latéral, un mécanisme de fermeture pour lier de manière étanche la feuille à une autre feuille possédant un mécanisme de fermeture complémentaire sur chacun de ses bords latéraux.

5. Natte selon la revendication 4, caractérisée en ce que le mécanisme de fermeture sur les bords latéraux de la feuille présente des profilés rapportés, les profilés de l'une des feuilles venant en prise avec les profilés de l'autre feuille.

6. Natte selon la revendication 5, caractérisée en ce que les profils (a) sont auto-étanchéifiants ou (b) peuvent être étanchéifiés à l'aide d'un produit d'étanchéité.